# EUROPEAN PATENT APPLICATION

(11) **EP 1 220 132 A2**
(43) Date of publication of application: **03.07.2002**
(21) Application number: 01660247.6
(22) Date of filing: 20.12.2001
(51) Int. Cl.: G06F 17/60, H04Q 7/22

(54) **Method and system for forming combination message in telecommunication system**

(30) Priority: 21.12.2000 FI 20002817
(71) Applicant: Add2phone Oy, 00100 Helsinki (FI)
(72) Inventor: Vesalainen, Heikki, 01600 Vantaa (FI)
(74) Representative: Äkräs, Tapio Juhani

(57) **Abstract**

A method and a system for forming a combination message in a telecommunication system, which is connected to one or more mobile systems (10, 20, 30) with one or more mobile stations (11, 21, 31), the system (60) being arranged to form a combination message to be transmitted to a mobile station of a mobile system in one or more mobile system messages by combining an information part and a notice part, the system (60) being also arranged to formulate, according to predetermined parameters, the information part and/or the notice part to be added to the combination message to be formed.

## Description

### BACKGROUND OF THE INVENTION

The invention relates to forming messages in a telecommunication system and particularly to forming combination messages containing an information part and a notice part.

Payable information can be transmitted to a mobile system subscriber in the form of a message for example such that the information provider or a third party pays for the expenses of the information either partly or in full, so that the subscriber obtains the information free of charge or at least at a lower price. To reward the party that paid for the information, the message conveying the information to be transmitted to the subscriber's mobile station is supplemented with a notice informing the subscriber of the payer of the information, for instance. Thus, a notice that is included in a message is typically similar to an advertisement.

In prior art systems, the actual information content and the notice are typically combined such that an information part obtained from the information provider is supplemented with a standard notice part, and the obtained combination message is transmitted to the mobile phone of the subscriber. If the combination message is longer than the message length allowed in the mobile system used, the message is usually transmitted in two or more mobile system messages. For example, a single short message based on the GSM (Global System for Mobile Communication) SMS (Short Message Service) can be used to convey a message of altogether 160 characters, which can contain either ASCII or binary data. A combination message thus refers herein to a combination of an information part and a notice part. Such a combination message can be transmitted in either one or several separate mobile system messages.

WO 00/21293 discloses an example of a system, where an information part and a notice part are transmitted each in its own message, so that the user must first read the message containing the notice part in order to be able to read the message containing the information part.

Different types of messages can be transmitted to different mobile terminals depending on the mobile station used, the mobile network and the network operator. Nowadays, some mobile terminals can even receive messages containing voice, image or video material in addition to text.

A problem with the known systems and arrangements is that when a combination message is being formed, for example the message properties of the receiving mobile station or the transmitting mobile network are not taken into account, but a combination message is formed simply by combining an information part obtained from the information provider with a standard notice part. Therefore a combination message may possibly be transmitted for example in two mobile system messages, even though it could be fitted into a single message. Furthermore, different message types, such as voice and picture messages, or combinations thereof cannot be effectively utilized in combination messages, but only text messages are normally used.

### BRIEF DESCRIPTION OF THE INVENTION

An objective of the invention is to provide a method and equipment implementing the method so as to eliminate the aforementioned problems. The objective of the invention is achieved by a method and a system that are characterized by what is disclosed in independent claims 1 and 16. The preferred embodiments of the invention are disclosed in the dependent claims.

The invention is based on the idea that when a combination message to be transmitted to a mobile station in a mobile system is formed, the information part and/or the notice part to be added to the combination message are formulated according to predetermined parameters.

An advantage of the method and the system according to the invention is that a combination message can be optimized for example with respect to length or type according to the parameters used. If the parameters are for example parameters describing the message properties of the mobile network and/or the mobile station, a combination message can be formed such that only one mobile system message is needed to transmit it. Also, the available message types can be utilized effectively.

### BRIEF DESCRIPTION OF THE FIGURES

The invention will be described below in more detail in connection with the preferred embodiments and with reference to the accompanying drawings, in which
Figure 1 shows a block diagram of a telecommunication system according to an embodiment of the invention, and
Figure 2 shows a flowchart of a method according to the invention for forming a combination message according to a preferred embodiment of the invention.

### DETAILED DESCRIPTION OF THE INVENTION

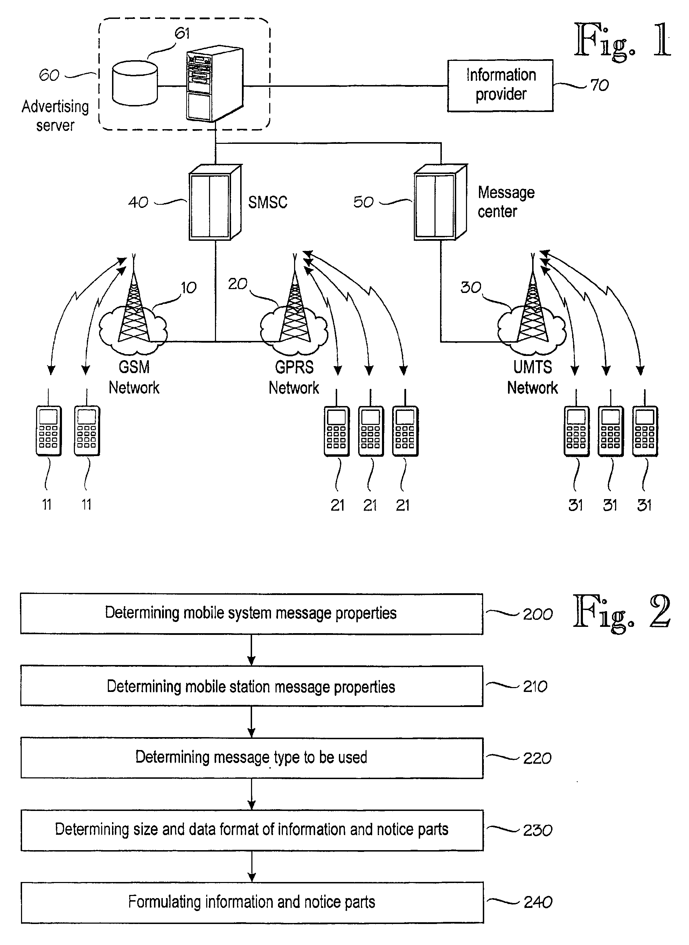

Figure 1 shows a block diagram of a telecommunication system according to an embodiment of the invention. It should be noted that the figure only shows components that are essential for understanding the invention. The figure shows GSM and GPRS (General Packet Radio Service) mobile systems 10 and 20. The detailed structure of the systems is not significant for the basic idea of the invention. The figure further shows mobile stations 11 using the GSM 10 and mobile stations 21 using the GPRS 20. SMS applied in the GSM and the GPRS is operated by means of a short message service centre (SMSC) 40 connected to the systems. The SMSC 40 is an exchange connected to the GSM or the GPRS, via which short messages are transmitted and in which they can be stored for subsequent transmission if the recipient cannot be reached. The figure also shows a third-generation (3G) universal mobile telephone system (UMTS) 30 and mobile stations 31 using the system. It also shows a message centre 50 servicing the UMTS. A message service used in the UMTS is for example a multimedia message service (MMS). The invention is not restricted to the systems shown in the figure, but it can also be applied to other mobile systems and/or message services, such as I-Mode, WAP (Wireless Application Protocol) and EMS, without changing the basic idea of the invention. Also, the terms used should be understood as descriptive and not restrictive.

A mobile station 11, 21 and 31 refers herein generally to a combination of a mobile subscriber and an actual mobile terminal. The mobile terminal can be any terminal that is able to communicate in the mobile system 10, 20 or 30, or a combination of several terminals. A subscriber is typically identified based on a subscriber identification module (SIM) that is detachably connected to the mobile terminal. The receiver can thus be any mobile terminal that is arranged at least to receive messages transmitted via the mobile system 10, 20 or 30. Examples of such terminals include a mobile phone, a personal digital assistant (PDA) with integrated telephone functionality, an integrated card phone and a PDA, and an integrated phone and a PC.

The message centres 40 and 50 do not necessarily constitute a single unit, as shown in the figure for the sake of clarity, but they can consist of functions that are decentralized in different units. The message centres 40 and 50 are typically connected to external data networks, such as an IP (Internet Protocol) network (not shown in the figure) or a public switched telephone network (PSTN), and they can preferably receive a message via any network to be forwarded to a mobile station 11, 21 or 31. Figure 1 further shows an element 60 containing the functionality according to the invention. As shown in the figure, this element can be can a separate unit, such as an advertising server, but it can also be situated in connection with some other network element, such as a message centre. The advertising server 60 is preferably connected to external data networks, such as the Internet or a PSTN, via which it can communicate with information providers 70. The advertising server 60 can also provide information itself.

The advertising server 60 operates such that the information to be transmitted to the mobile station 11, 21 or 31, e.g. information on the weather, sports, stock quotations, news or the like, is obtained from the information provider 70. The advertising server supplements the obtained information with a notice, such as an advertisement for the payer of the information, and transmits this combination as a message to the mobile station 11, 21 or 31 via the message centre 40 or 50 and the mobile network 10, 20 or 30. The information to be transmitted to the mobile station 11, 21 or 31 can be transmitted in response to a request received from the mobile station 11, 21 or 31, or the message(s) can be transmitted according to a predetermined schedule, for instance.

According to the basic idea of the invention, when a combination message to be transmitted to a mobile station 11, 21 or 31 of the mobile system 10, 20 or 30 is being formed, the information part and/or the notice part to be added to the combination message are first formulated according to predetermined parameters, which preferably consist of the message properties of the mobile system 10, 20 or 30 and the mobile station 11, 21 or 31 determining what kind of messages the mobile system 10, 20 or 30 can transmit and what kind of messages the mobile station 11, 21 or 31 can receive and process.

Figure 2 shows a flowchart of a method according to the invention for forming a combination message according to a preferred embodiment of the invention. The steps shown in the figure are preferably carried out by means of the advertising server 60. The first step 200 comprises determining preferably message properties of the mobile system 10, 20 or 30 to which the combination message is to be transmitted. The message properties can be determined for example by means of the mobile system type. For example in the GSM, it can be concluded that the system supports SMS messages, so that a combination message can be transmitted by means of one or more short messages. Step 210 thereafter comprises determining message properties of the mobile station 11, 21 or 31 to which the combination message is to be transmitted. In a preferred embodiment of the invention, a database 61 is maintained on the mobile stations 11, 21 and 31 of the mobile systems 10, 20 and 30. The database 61 can contain information about the message properties or types of the mobile stations, and the message properties can be determined based on the type. The database 61 can be situated in connection with the advertising server 60 or in some other location. If there is no database 61 or the database does not contain data on the mobile station, the most probable message properties of the mobile station can be determined based on the type of the mobile system. The mobile station type or the actual message properties may also become evident from the request transmitted by the mobile station in order to receive a combination message. Also, if the mobile station has requested information by transmitting for example a text-form SMS message, it can be assumed that the mobile station is able to receive at least similar SMS messages. The aforementioned message properties thus determine what kind of messages the mobile system 10, 20 or 30 can transmit and what kind of messages the mobile station 11, 21 or 31 can receive and process. The message properties preferably determine the maximum message size or the data format, i.e. what kind of data the message can contain, e.g. text, voice or image data, and how this data should be encoded. The message properties can also directly indicate the message types that are supported. For example the GSM short message service (SMS) can enable for example such message types as 'SMS text message' and 'SMS picture message'. The next step 220 comprises determining, based on the determined message properties, the message type(s) of the mobile system where the combination message is transmitted. The message type to be selected should naturally be supported by both the mobile system 10, 20 or 30 and the mobile station 11, 21 or 31. If there are several alternatives, the most suitable one(s) can be selected according to predetermined criteria. An example of such criteria can require the use of a message type supporting image content whenever possible and the use of a message type supporting text content in other situations. When the message type or types have been determined, the size and/or data format of the information part and the notice part are preferably determined in step 230 according to the message type(s) used for transmission. The size of the parts depends on whether one or more mobile system messages are used to transmit a single combination message, i.e. how much space is available altogether. For example, the information part and the notice part can be assigned certain proportions of the total size of the combination message. For example the (maximum) length of the notice part can also be determined by subtracting from the available space the length of the information part obtained from the information provider 70. The data format of the parts can be any of the formats supported by the message used for transmission. The last step 240 comprises formulating the information part and the notice part preferably within the limits set by the available space and the data format. It is also possible that only one of the aforementioned parts is formulated.

The formulation 240 can refer, among other things, to adapting the length of the information part or the notice part to the available space. For instance, the length of an information part containing weather data can vary if it contains the place name, since such names can be of different lengths. In such a case, the information part can be shortened, if needed, so that it always fits in the place reserved for it in order to avoid a situation where the last few characters of the information part must be transmitted in a separate message. Furthermore, the formulation 240 can mean that the information part or notice part to be used is selected from two or more alternatives. The alternatives preferably correspond with respect to factual content, but for example the length and data format thereof vary, which means that the information part or notice part that best meets the current boundary conditions can be selected in each case. For example, a longer alternative is used whenever it is possible within the limits of the available space. For example alternative notice parts can be stored in the database 61 of the advertising server 61. The formulation 240 can also mean that the information part or the notice part is formulated according to predetermined rules when the available space and/or data format are known, or according to some other criterion. After the formulation, the information part and the notice part are transmitted together as a combination message to the mobile station 11, 21 or 31 in one or more mobile system messages. It is also possible that the formulation cannot always be carried out:
the space reserved for the information part or the notice part can be too small, so that the part cannot be sufficiently shortened or, for example, none of the available alternative parts fit in the reserved space. In such a case the process preferably returns to step 220, and the message type to be used is redetermined. Alternatively, the process returns to step 230, where the size of the space reserved for the information part and/or the notice part is redetermined. The space available for the parts can be enlarged for example by increasing the number of messages used to convey a combination message or by using a different message type(s). Alternatively, if it is detected that the notice part cannot be fitted in the same message with the information part, the parts can be transmitted in separate messages. In this case, the type(s) of the messages to be used for the parts can be preferably redetermined.

The formation of a combination message according to an embodiment of the invention will be described below by way of an example.

Two personalized messages are to be transmitted to two different mobile system users. For example, each user has given permission to transmit once an hour information about changed stock quotations together with sponsored content or a notice part.
Mobile system of user 1:
   - Identified as a GSM network, network of operator A
   - GSM network properties: SMS 160 characters
   - The network also comprises WAP servers.
Mobile system of user 2:
   - Identified as an HSCSD (High Speed Circuit Switched Data) network, network of operator B
   - HSCSD network properties: SMS 160 characters
   - The network also comprises WAP servers.
Mobile station of user 1:
   - Mobile station manufacturer X, model Y
   - Mobile station properties: SMS support (mobile originating (MO) and mobile terminating (MT)), only text messages.
Mobile station of user 2:
   - Mobile station manufacturer Z, model W
   - Mobile station properties: SMS support (MO and MT), support for ringing tones, picture messages, operator logos. The mobile station also comprises WAP 1.1 support.

User 1 wants information about the following shares:
Share A (OSAKA)
Share B (OSAKB)

User 2 wants information about the following shares:
Share C (OSAKC)
Share D (OSAKD)

Notice part alternatives - text (SMS) include:

| | |
|---|---|
| "Sponsored by Add2Phone Ltd." | (27 characters) |
| "Sponsored by Add2Phone" | (22 characters) |
| "Tiedon tarjosi Add2Phone Oy" | (27 characters) |
| "Add2Phone Ltd." | (14 characters) |
| "Surffaa myös www.add2phone.com" | (30 characters) |
| "By A2P" | (06 characters) |

Notice part alternatives -picture message (SMS) include:
Add2Phone -logo1
Add2Phone -logo2

Notice part alternatives - ringing tone (SMS) include:
Add2Phone.000
A2P-punk.000
A2P-pop.000

Notice part alternatives - WBMP (Wireless BitMaP) include:
A2p-logo.wbmp
a2p-mainos.wbmp
a2p-ukko.wbmp

All this data is preferably stored in the database 61. For example, if it is determined that only text messages that possibly fit in the mobile stations of the users are transmitted to both users, for instance no WBMPs are needed since they are intended for WAP-compatible mobile stations.

In accordance with what is disclosed above, combination messages are formed as follows.
1. Determining mobile system message properties (step 200):
   - GSM/HSCSD → short messages (SMS) of 160 characters.
2. Determining mobile station message properties (step 210):
   - User 1: Manufacturer X, model Y → SMS (text)
   - User 2: Manufacturer Z, model W → SMS (text, voice and picture) and WAP
   - WAP has not been determined for use in this example, and WAP properties will not be used even though the mobile station supported them.
3. Determining the message type to be used (step 220):
   - Information part of user 1 is in textual form (55 characters): "Tilanne 8.12.00, klo 10:40 (OSAKA,-),(OSAKB, -1.51%)"
   - Selecting the SMS (text, 160 characters).
   - Information part of user 2 is as follows (74 characters):
      "Tilanne 8.12.00, klo 10:40 Osake C (OSAKC, -1.67%) Osake D (OSAKD, +0.89%)"
   - The message of user 2 can contain a) text, b) a picture, c) an operator logo
   - Selecting an SMS picture message.
4. Determining the size and data format of the information part and the notice part (step 230):
   ■ User 1: information part of 55 characters, so the notice part will have 160 - 55 = 105 characters, the data format for each part is text.
   ■ User 2: a picture message is transmitted in three SMS messages and the picture message can still fit 120 ASCII characters, so that the information part will have 120 characters, the data format for the information part is text and for the notice part a picture message (SMS).
5. Formulating the information part and the notice part (step 240):
   - The information part (55 characters) of user 1 does not have to be shortened
   - Selecting the notice part for the available space (105 characters):
"Tiedon tarjosi Add2Phone Oy" (27 characters).

Therefore, when the information part and the notice part are combined, the length of the combination message will be 82 characters (which is < 160 characters), thus saving one message when these parts can be combined into a single SMS message.
■ Selecting Add2Phone -logo1 as the notice part of user 2
■ The information part fits the available text space without formulation (74 characters < 120 characters).

Therefore, four messages to be transmitted can be replaced by three messages.

It is obvious to those skilled in the art that as the technology develops the basic idea of the invention can be implemented in several manners. The invention and the embodiments thereof are thus not restricted to the examples described above, but they can vary within the scope of the claims.

## Claims

1. A method for forming a combination message in a telecommunication system, which is connected to one or more mobile systems with one or more mobile stations, the method comprising steps of
forming a combination message to be transmitted to a mobile station of a mobile system in one or more mobile system messages by combining an information part and a notice part, **characterized by**
formulating (240), according to predetermined parameters, the information part and/or the notice part to be added to the combination message to be formed.

2. A method according to claim 1, **characterized in that** the step of formulating the information part and/or the notice part according to predetermined parameters comprises steps of
determining (220), according to said predetermined parameters, the type(s) of the one or more mobile system messages where the combination message is transmitted, and
formulating (240) the information part and/or the notice part according to the message type(s) to be used.

3. A method according to claim 2, **characterized in that** the step of formulating the information part and/or the notice part according to the message type(s) to be used comprises a step of
determining (230) the size and/or the data format of a portion to be used for the information part and/or the notice part according to the message type(s), and
formulating (240) the information part and/or the notice part according to the size and/or the data format of the portion to be used.

4. A method according to claim 3, **characterized in that** the step (240) of formulating the information part and/or the notice part according to the size of the portion to be used comprises a step of
selecting the information part and/or the notice part to be used according to the size of the portion to be used from at least two preformed alternative information parts and/or notice parts.

5. A method according to claim 3, **characterized in that** the step (240) of formulating the information part and/or the notice part according to the size of the portion to be used comprises a step of
adapting the length of the information part and/or the notice part to be used to suit the portion reserved for it.

6. A method according to claim 3, 4 or 5, **characterized in that** the step (240) of formulating the information part and/or the notice part according to the data format of the portion to be used comprises a step of
selecting the information part and/or the notice part to be used according to the data format to be used from at least two preformed alternative information parts and/or notice parts.

7. A method according to any one of claims 1 to 6, **characterized in that** said predetermined parameters comprise at least one parameter describing message properties of the mobile system.

8. A method according to claim 7, **characterized by** determining (200) the message properties of the mobile system according to the type of the system.

9. A method according to any one of claims 1 to 8, **characterized in that** said predetermined parameters comprise at least one parameter describing message properties of the mobile station.

10. A method according to claim 9, **characterized by** transmitting a combination message to the mobile station in response to a request received from the mobile station containing data on the message properties of the mobile station, followed by determining (210) the message properties of the mobile station according to the data contained in said request.

11. A method according to claim 9, **characterized by** maintaining data on the message properties of the mobile stations in the mobile system, and determining (210) the message properties of the mobile station according to said maintained data.

12. A method according to claim 9, **characterized by** determining (210) the message properties of the mobile station according to the mobile station type.

13. A method according to claim 12, **characterized by** transmitting a combination message to the mobile station in response to a request received from the mobile station containing data on the mobile station type, the step (210) of determining the message properties of the mobile station being carried out according to the data on the type contained in said request.

14. A method according to claim 12, **characterized by** maintaining data on the types of the mobile stations in the mobile system, the step (210) of determining the message properties of the mobile station being carried out according to said maintained data.

15. A method according to any one of claims 1 to 14, **characterized in that** the notice part contains an advertisement.

16. A system for forming a combination message in a telecommunication system, which is connected to one or more mobile systems (10, 20, 30) with one or more mobile stations (11, 21, 31), the system (60) being arranged to form a combination message to be transmitted to a mobile station of a mobile system in one or more mobile system messages by combining an information part and a notice part, **characterized in that**
the system (60) is also arranged to formulate, according to predetermined parameters, the information part and/or the notice part to be added to the combination message to be formed.

17. A system according to claim 16, **characterized in that** when the system formulates the information part and/or the notice part according to predetermined parameters, it is arranged to
determine, according to said predetermined parameters, the type(s) of the one or more mobile system (10, 20 or 30) messages where the combination message is transmitted, and to
formulate the information part and/or the notice part according to the message type(s) to be used.

18. A system according to claim 17, **characterized in that** when the system formulates the information part and/or the notice part according to the message type(s) to be used, it is arranged to
determine the size and/or the data format of the portion to be used for the information part and/or the notice part according to the message type(s), and to
formulate the information part and/or the notice part according to the size and/or the data format of the portion to be used.

19. A system according to claim 16, 17 or 18, **characterized in that** said predetermined parameters comprise at least one parameter describing message properties of the mobile system (10, 20 or 30).

20. A system according to any one of claims 16 to 19, **characterized in that** said predetermined parameters comprise at least one parameter describing message properties of the mobile station (11, 21 or 31).

21. A system according to claim 20, **characterized in that** the system (60) comprises a database (61) for maintaining data on the message properties of the mobile stations in the mobile system.

22. A system according to any one of claims 16 to 21, **characterized in that** the notice part contains an advertisement.
